# EUROPEAN PATENT SPECIFICATION

(11) **EP 4 241 956 B1**
(45) Date of publication and mention of the grant of the patent: **12.02.2025**
(21) Application number: 22775344.9
(22) Date of filing: 16.03.2022
(51) Int. Cl.: B29C 41/00, B29C 41/14, C08L 11/02, C08J 5/02

(54) **CHLOROPRENE POLYMER AND MANUFACTURING METHOD THEREFOR, CHLOROPRENE POLYMER COMPOSITION, AND DIP MOLDED BODY**
CHLOROPRENPOLYMER UND HERSTELLUNGSVERFAHREN DAFÜR, CHLOROPRENPOLYMERZUSAMMENSETZUNG UND TAUCHFORMKÖRPER
POLYMÈRE DE CHLOROPRÈNE ET SON PROCÉDÉ DE FABRICATION, COMPOSITION DE POLYMÈRE DE CHLOROPRÈNE ET CORPS MOULÉ PAR IMMERSION

(30) Priority: 23.03.2021 JP 2021049008
(43) Date of publication of application: 13.09.2023
(73) Proprietor: Denka Company Limited, Tokyo 103-8338 (JP)
(72) Inventor: ITO, Misaki, Tokyo 103-8338 (JP); KATO, Masahiro, Tokyo 103-8338 (JP); KUMAGAI, Yushi, Tokyo 103-8338 (JP)
(74) Representative: Hoffmann Eitle
(86) International application number: PCT/JP2022/011969
(87) International publication number: WO 2022/202556

(56) References cited:
- EP-A1- 3 650 478
- EP-A1- 3 783 040
- JP-A- 2000 170 846
- JP-A- 2000 302 920
- JP-A- 2002 053 829
- JP-A- 2002 121 232
- JP-A- 2005 154 756
- JP-A- 2011 021 046
- JP-A- 2011 026 423
- JP-A- 2019 143 002
- JP-A- 2019 143 002
- JP-A- H07 292 166
- JP-A- H08 245 841
- JP-A- H08 245 841
- JP-A- S4 889 285
- JP-A- S63 245 449
- JP-B2- 3 992 365
- US-A1- 2012 130 008
- KENJI ITOYAMA, KENJI ITOYAMA, SHIRO MATSUNAGA: "Emulsion Polymerization Of Chloroprene. Study Of Branching And Chain Transfer Reaction With The Aid Of Gpc-Intrinsic Viscosity Method", NIPPON GOMU KYOKAISHI, NIHON GOMU KYOUKAI, JP, vol. 64, no. 8, 1 January 1991 (1991-01-01), JP , pages 516 (78) - 521 (83), XP009539812, ISSN: 0029-022X, DOI: 10.2324/gomu.64.516

## Description

### Technical Field

The present invention relates to a chloroprene polymer and a manufacturing method therefor, a chloroprene polymer composition, and a dip molded body.

### Background Art

A chloroprene polymer has been used in various fields such as a dip molded body (dip molded product), a fiber treating agent, a paper processing agent, an adhesive, a bonding adhesive, elastic asphalt (modified asphalt), and elastic cement. Particularly, in the dip molded body, a chloroprene polymer is used as a main raw material for various gloves for household use, industrial use, surgical use, and the like. In the use applications of gloves, conventionally, a natural rubber has been mainly used, but since allergies due to a protein and the like contained in the natural rubber become problematic, it has been recommended to use synthetic rubber gloves. In particular, a chloroprene polymer has physical properties close to those of the natural rubber in terms of texture and the like, and thus the chloroprene polymer has been studied as an alternative material to the natural rubber (see, for example, Patent Literatures 1 and 2 below). Patent Literature 3 relates to a chloroprene polymer latex comprising a chloroprene polymer with a toluene-insoluble content and a toluene-soluble content, and an alkali metal salt emulsifier. Patent Literature 4 relates to a polychloroprene prepared by radical polymerization of chloroprene in the presence of a dithiocarbamic ester compound. Patent Literature 5 relates to a two-pack type aqueous polychloroprene adhesive comprising a polychloroprene latex obtained by the emulsion polymerization of chloroprene and 2,3-dichloro-1,3-butadiene. Patent Literature 6 relates to a mercaptan-modified polychloroprene latex.

### Citation List

### Patent Literature

Patent Literature 1: International Publication WO 2019/009038
Patent Literature 2: Japanese Unexamined Patent Publication No. 2019-143002
Patent Literature 3: Japanese Unexamined Patent Publication No. 2019 143002
Patent Literature 4: US Unexamined Patent Publication No. US 2012/130008 A1
Patent Literature 5: Japanese Unexamined Patent Publication No. JP 2002 053829 A
Patent Literature 6: EP Unexamined Patent Publication No. EP 3 650 478 A1

### Summary of Invention

### Technical Problem

A dip molded body (such as gloves) to be obtained using a chloroprene polymer may be inferior to the case of using a natural rubber or an isoprene rubber in flexibility in some cases. Therefore, it is required for the chloroprene polymer to improve the flexibility of a dip molded body obtained using the chloroprene polymer.

Furthermore, it is required for the chloroprene polymer to achieve excellent breaking strength in addition to excellent flexibility in a dip molded body obtained using the chloroprene polymer.

An object of an aspect of the present invention is to provide a chloroprene polymer with which a dip molded body having excellent flexibility and breaking strength can be obtained. An object of another aspect of the present invention is to provide a chloroprene polymer composition containing the aforementioned chloroprene polymer. An object of still another aspect of the present invention is to provide a dip molded body of the aforementioned chloroprene polymer composition. An object of still another aspect of the present invention is to provide a method for manufacturing a chloroprene polymer by which a dip molded body having excellent flexibility and breaking strength can be obtained.

### Solution to Problem

An aspect of the present invention relates to a chloroprene polymer containing at least one selected from the group consisting of a homopolymer of chloroprene and a copolymer of chloroprene with 2,3-dichloro-1,3-butadiene, in which in gel permeation chromatography measurement of a toluene soluble content, the chloroprene polymer has a first peak having a weight average molecular weight of 500,000 to 900,000 and a second peak having a weight average molecular weight of 7,000 to 80,000, and a toluene insoluble content is 60% by mass or more.

The aforementioned chloroprene polymer may be a chloroprene polymer that is a mixture of a polymer A containing a copolymer of chloroprene with 2,3-dichloro-1,3-butadiene and a polymer B containing at least one selected from the group consisting of a homopolymer of chloroprene and a copolymer of chloroprene with 2,3-dichloro-1,3-butadiene, in which a weight average molecular weight of a toluene soluble content in the polymer A is 500,000 to 900,000, a weight average molecular weight of a toluene soluble content in the polymer B is 7,000 to 80,000, a toluene insoluble content of the polymer A is 70% by mass or more, and a toluene insoluble content of the polymer B is 5% by mass or less.

Another aspect of the present invention relates to a chloroprene polymer composition containing the aforementioned chloroprene polymer.

Still another aspect of the present invention relates to a dip molded body of the aforementioned chloroprene polymer composition.

Still another aspect of the present invention relates to a method for manufacturing a chloroprene polymer, the method including a step of mixing a polymer A obtained by polymerizing chloroprene and 2,3-dichloro-1,3-butadiene at a polymerization temperature of 10 to 45°C and a polymerization rate of 80 to 95% in the presence of a chain transfer agent, pure water, alkali, an emulsifier, a reducing agent, and a polymerization initiator, and a polymer B obtained by polymerizing 90 to 100 parts by mass of chloroprene at a polymerization temperature of 10 to 45°C and a polymerization rate of 60 to 90% in the presence of 1 to 10 parts by mass of a chain transfer agent, pure water, alkali, an emulsifier, a reducing agent, and a polymerization initiator, in which a ratio of 2,3-dichloro-1,3-butadiene in the polymerization of the polymer B is 10 parts by mass or less. In gel permeation chromatography measurement of a toluene soluble content, the chloroprene polymer has a first peak having a weight average molecular weight of 500,000 to 900,000 and a second peak having a weight average molecular weight of 7,000 to 80,000.

### Advantageous Effects of Invention

According to an aspect of the present invention, it is possible to provide a chloroprene polymer with which a dip molded body having excellent flexibility and breaking strength can be obtained. According to another aspect of the present invention, it is possible to provide a chloroprene polymer composition containing the aforementioned chloroprene polymer. According to still another aspect of the present invention, it is possible to provide a dip molded body of the aforementioned chloroprene polymer composition. According to still another aspect of the present invention, it is possible to provide a method for manufacturing a chloroprene polymer by which a dip molded body having excellent flexibility and breaking strength can be obtained.

### Description of Embodiments

Hereinafter, embodiments for carrying out the present invention will be specifically described. Note that, the present invention is not limited to embodiments described below.

In the present specification, "A or more" of the numerical range means A and a range of more than A. "A or less" of the numerical range means A and a range of less than A. In the numerical ranges that are described stepwise in the present specification, the upper limit value or the lower limit value of the numerical range of a certain stage can be arbitrarily combined with the upper limit value or the lower limit value of the numerical range of another stage. In the numerical ranges that are described in the present specification, the upper limit value or the lower limit value of the numerical range may be replaced with the value shown in Examples. "A or B" may include any one of A and B, and may also include both of A and B. Materials listed as examples in the present specification can be used singly or in combinations of two or more kinds thereof, unless otherwise specified. In a case where a plurality of substances corresponding to each component exist in the composition, the content of each component in the composition means the total amount of the plurality of substances that exist in the composition, unless otherwise specified. The expression "(meth)acrylic acid" means at least one of acrylic acid and methacrylic acid corresponding thereto, and the same applies also to similar expressions such as "(meth)acrylate". In measurement of "toluene soluble content" and "toluene insoluble content", toluene at room temperature of 23°C can be used.

### <Chloroprene polymer and chloroprene polymer composition>

First, a chloroprene polymer of the present embodiment will be described. The chloroprene polymer of the present embodiment is a polymer having chloroprene (2-chloro-1,3-butadiene) as a monomer unit, and contains at least one selected from the group consisting of a homopolymer of chloroprene and a copolymer of chloroprene with 2,3-dichloro-1,3-butadiene. In the chloroprene polymer of the present embodiment, the homopolymer of chloroprene or the copolymer of chloroprene with 2,3-dichloro-1,3-butadiene may be dispersed in water.

In gel permeation chromatography (GPC) measurement of a toluene soluble content, the chloroprene polymer of the present embodiment has a first peak having a weight average molecular weight (Mw) of 500,000 to 900,000 and a second peak having a weight average molecular weight (Mw) of 7,000 to 80,000. A toluene insoluble content of the chloroprene polymer of the present embodiment is 60% by mass or more.

According to the chloroprene polymer of the present embodiment, a dip molded body having excellent flexibility and breaking strength can be obtained. According to the chloroprene polymer of the present embodiment, a dip molded body having excellent flexibility, breaking strength, and breaking elongation can also be obtained.

The aforementioned first peak and second peak in the GPC measurement of the toluene soluble content can be obtained as a weight average molecular weight in terms of polystyrene. The GPC measurement can be performed under the conditions described in Examples.

When the toluene insoluble content of the chloroprene polymer is 60% by mass or more, excellent flexibility can be obtained. The toluene insoluble content of the chloroprene polymer may be 63% by mass or more, 65% by mass or more, 68% by mass or more, 70% by mass or more, 72% by mass or more, 75% by mass or more, 77% by mass or more, 78% by mass or more, 80% by mass or more, or 83% by mass or more. The toluene insoluble content of the chloroprene polymer may be 85% by mass or less, 83% by mass or less, 80% by mass or less, 78% by mass or less, 77% by mass or less, 75% by mass or less, 72% by mass or less, 70% by mass or less, 68% by mass or less, 65% by mass or less, or 63% by mass or less. From these viewpoints, the toluene insoluble content of the chloroprene polymer may be 60 to 85% by mass, 60 to 83% by mass, 60 to 80% by mass, 60 to 75% by mass, 60 to 70% by mass, 65 to 83% by mass, 65 to 80% by mass, 65 to 75% by mass, 65 to 70% by mass, 70 to 83% by mass, 70 to 80% by mass, 70 to 75% by mass, 75 to 83% by mass, or 75 to 80% by mass.

The chloroprene polymer of the present embodiment may be an embodiment which is a mixture of a polymer A containing a copolymer of chloroprene with 2,3-dichloro-1,3-butadiene and a polymer B containing at least one selected from the group consisting of a homopolymer of chloroprene and a copolymer of chloroprene with 2,3-dichloro-1,3-butadiene, in which a weight average molecular weight (Mw) of a toluene soluble content in the polymer A is 500,000 to 900,000, a weight average molecular weight (Mw) of a toluene soluble content in the polymer B is 7,000 to 80,000, a toluene insoluble content of the polymer A is 70% by mass or more, and a toluene insoluble content of the polymer B is 5% by mass or less. In this embodiment, a ratio of the polymer A may be 70 to 95% by mass in terms of solid content on the basis of the total of the polymer A and the polymer B (that is, the mass ratio of solid contents of the polymer A/the polymer B may be 70/30 to 95/5).

The weight average molecular weight of the toluene soluble content in the polymer A and the polymer B can be obtained by GPC measurement, and can be obtained as a weight average molecular weight in terms of polystyrene. The GPC measurement can be performed under the conditions described in Examples.

When the weight average molecular weight of the first peak of the chloroprene polymer or the weight average molecular weight of the toluene soluble content in the polymer A is 500,000 or more, excellent breaking strength can be obtained. The weight average molecular weight of the first peak of the chloroprene polymer and the weight average molecular weight of the toluene soluble content in the polymer A may be 530,000 or more, 550,000 or more, 580,000 or more, 600,000 or more, 630,000 or more, 650,000 or more, 680,000 or more, 700,000 or more, 730,000 or more, 750,000 or more, 780,000 or more, 800,000 or more, 830,000 or more, or 850,000 or more, from the viewpoint of easily obtaining excellent breaking strength.

When the weight average molecular weight of the first peak of the chloroprene polymer or the weight average molecular weight of the toluene soluble content in the polymer A is 900,000 or less, excellent flexibility can be obtained. The weight average molecular weight of the first peak of the chloroprene polymer and the weight average molecular weight of the toluene soluble content in the polymer A may be 850,000 or less, 830,000 or less, 800,000 or less, 780,000 or less, 750,000 or less, 730,000 or less, 700,000 or less, 680,000 or less, 650,000 or less, 630,000 or less, 600,000 or less, 580,000 or less, 550,000 or less, or 530,000 or less, from the viewpoint of easily obtaining excellent flexibility.

From these viewpoints, the weight average molecular weight of the first peak of the chloroprene polymer and the weight average molecular weight of the toluene soluble content in the polymer A may be 500,000 to 850,000, 500,000 to 800,000, 500,000 to 750,000, 500,000 to 700,000, 600,000 to 900,000, 600,000 to 850,000, 600,000 to 800,000, 600,000 to 750,000, 600,000 to 700,000, 650,000 to 900,000, 650,000 to 850,000, 650,000 to 800,000, 650,000 to 750,000, or 650,000 to 700,000.

When the weight average molecular weight of the second peak of the chloroprene polymer or the weight average molecular weight of the toluene soluble content in the polymer B is 7,000 or more, a dip molded body can be satisfactorily obtained. The weight average molecular weight of the second peak of the chloroprene polymer and the weight average molecular weight of the toluene soluble content in the polymer B may be 7,500 or more, 8,000 or more, 10,000 or more, 12,000 or more, 15,000 or more, 16,000 or more, or 17,000 or more, from the viewpoint of easily and satisfactorily obtaining a dip molded body. The weight average molecular weight of the second peak of the chloroprene polymer and the weight average molecular weight of the toluene soluble content in the polymer B may be 30,000 or more, 50,000 or more, or 70,000 or more, from the viewpoint of easily obtaining excellent breaking elongation.

When the weight average molecular weight of the second peak of the chloroprene polymer or the weight average molecular weight of the toluene soluble content in the polymer B is 80,000 or less, excellent flexibility can be obtained. The weight average molecular weight of the second peak of the chloroprene polymer and the weight average molecular weight of the toluene soluble content in the polymer B may be 70,000 or less, 50,000 or less, 30,000 or less, 20,000 or less, 18,000 or less, 17,000 or less, 16,000 or less, or 15,000 or less, from the viewpoint of easily obtaining excellent flexibility. The weight average molecular weight of the second peak of the chloroprene polymer and the weight average molecular weight of the toluene soluble content in the polymer B may be 12,000 or less, 10,000 or less, 8,000 or less, or 7,500 or less, from the viewpoint of easily obtaining excellent breaking strength.

From these viewpoints, the weight average molecular weight of the second peak of the chloroprene polymer and the weight average molecular weight of the toluene soluble content in the polymer B may be 7,000 to 50,000, 7,000 to 30,000, 7,000 to 20,000, 7,000 to 17,000, 10,000 to 80,000, 10,000 to 50,000, 10,000 to 30,000, 10,000 to 20,000, 10,000 to 17,000, 15,000 to 80,000, 15,000 to 50,000, 15,000 to 30,000, 15,000 to 20,000, or 15,000 to 17,000.

The toluene insoluble content of the polymer A may be 70% by mass or more, 75% by mass or more, 80% by mass or more, or 85% by mass or more, from the viewpoint of easily obtaining excellent flexibility and breaking strength. The toluene insoluble content of the polymer A may be 90% by mass or more or 95% by mass or more. The toluene insoluble content of the polymer A may be 95% by mass or less, 90% by mass or less, or 85% by mass or less, from the viewpoint of easily obtaining excellent flexibility and breaking strength. From these viewpoints, the toluene insoluble content of the polymer A may be 70 to 95% by mass, 70 to 90% by mass, 70 to 85% by mass, 80 to 95% by mass, 80 to 90% by mass, 80 to 85% by mass, 85 to 95% by mass, or 85 to 90% by mass.

The toluene insoluble content of the polymer B may be 5% by mass or less, 4% by mass or less, 3% by mass or less, 2% by mass or less, or 1% by mass or less, from the viewpoint of easily obtaining excellent flexibility and breaking strength. The toluene insoluble content of the polymer B is 0% by mass or more, and may be more than 0% by mass, 0.5% by mass or more, or 1% by mass or more, from the viewpoint of easily obtaining excellent flexibility and breaking strength. From these viewpoints, the toluene insoluble content of the polymer B may be more than 0% by mass and 5% by mass or less, more than 0% by mass and 3% by mass or less, more than 0% by mass and 2% by mass or less, more than 0% by mass and 1% by mass or less, 0.5 to 5% by mass, 0.5 to 3% by mass, 0.5 to 2% by mass, 0.5 to 1% by mass, 1 to 5% by mass, 1 to 3% by mass, or 1 to 2% by mass.

The ratio of the polymer A may be in the following range in terms of solid content on the basis of the total of the polymer A and the polymer B from the viewpoint of easily obtaining excellent flexibility and breaking strength. The ratio of the polymer A may be 70% by mass or more, 75% by mass or more, 80% by mass or more, or 85% by mass or more. The ratio of the polymer A may be 95% by mass or less, 90% by mass or less, 85% by mass or less, 80% by mass or less, or 75% by mass or less. From these viewpoints, the ratio of the polymer A may be 70 to 95% by mass, 70 to 90% by mass, 70 to 85% by mass, or 75 to 85% by mass.

The homopolymer of chloroprene can be obtained by polymerizing chloroprene alone. The copolymer of chloroprene with 2,3-dichloro-1,3-butadiene is a polymer having chloroprene and 2,3-dichloro-1,3-butadiene as monomer units, and can be obtained by polymerizing a monomer composition containing chloroprene and 2,3-dichloro-1,3-butadiene.

The copolymer of chloroprene with 2,3-dichloro-1,3-butadiene may have a monomer unit of a monomer other than the chloroprene and the 2,3-dichloro-1,3-butadiene. Examples of such a monomer include esters of (meth)acrylic acid (such as methyl (meth)acrylate, butyl (meth)acrylate, and 2-ethylhexyl (meth)acrylate), hydroxyalkyl (meth)acrylate (such as 2-hydroxymethyl (meth)acrylate, 2-hydroxyethyl (meth)acrylate, and 2-hydroxypropyl (meth)acrylate), (meth)acrylic acid, 1-chloro-1,3-butadiene, butadiene, isoprene, ethylene, styrene, and (meth)acrylonitrile. On the other hand, the copolymer of chloroprene with 2,3-dichloro-1,3-butadiene may not have a monomer unit of a monomer other than the chloroprene and the 2,3-dichloro-1,3-butadiene, and may be a copolymer substantially composed of a monomer unit of chloroprene and a monomer unit of 2,3-dichloro-1,3-butadiene.

In the copolymer with 2,3-dichloro-1,3-butadiene in the polymer A or the polymer B, the ratio of chloroprene (monomer) may be in the following range with respect to 100 parts by mass of the monomers (the total of 100 parts by mass of the monomers (raw material monomers) for obtaining a chloroprene polymer or the total of 100 parts by mass of the chloroprene and the 2,3-dichloro-1,3-butadiene; the same applies hereinafter) from the viewpoint that a dip molded body to be obtained easily exhibits excellent flexibility. The ratio of the chloroprene may be 80 parts by mass or more, 85 parts by mass or more, 88 parts by mass or more, or 90 parts by mass or more. The ratio of the chloroprene may be 99 parts by mass or less, 98 parts by mass or less, 97 parts by mass or less, 95 parts by mass or less, 94 parts by mass or less, 92 parts by mass or less, or 91 parts by mass or less. From these viewpoints, the ratio of the chloroprene may be 80 to 99 parts by mass, 80 to 98 parts by mass, 80 to 95 parts by mass, 80 to 92 parts by mass, 85 to 99 parts by mass, 85 to 98 parts by mass, 85 to 95 parts by mass, 85 to 92 parts by mass, 90 to 99 parts by mass, 90 to 98 parts by mass, 90 to 95 parts by mass, or 90 to 92 parts by mass.

The ratio of 2,3-dichloro-1,3-butadiene (monomer) to be copolymerized with chloroprene in the polymer A or the polymer B may be in the following range with respect to 100 parts by mass of the monomers from the viewpoint that a dip molded body to be obtained easily exhibits excellent flexibility. The ratio of the 2,3-dichloro-1,3-butadiene may be 1 part by mass or more, 2 parts by mass or more, 3 parts by mass or more, 5 parts by mass or more, 6 parts by mass or more, 8 parts by mass or more, or 9 parts by mass or more. The ratio of the 2,3-dichloro-1,3-butadiene may be 20 parts by mass or less, 15 parts by mass or less, 12 parts by mass or less, or 10 parts by mass or less. From these viewpoints, the ratio of the 2,3-dichloro-1,3-butadiene may be 1 to 20 parts by mass, 2 to 20 parts by mass, 5 to 20 parts by mass, 8 to 20 parts by mass, 1 to 15 parts by mass, 2 to 15 parts by mass, 5 to 15 parts by mass, 8 to 15 parts by mass, 1 to 10 parts by mass, 2 to 10 parts by mass, 5 to 10 parts by mass, or 8 to 10 parts by mass. The ratio of the 2,3-dichloro-1,3-butadiene can be determined by measuring a pyrolysis gas chromatograph of the polymer, and for example, the pyrolysis gas chromatograph can be performed under the following measurement conditions.
· Used column: DB-5 0.25 mmφ × 30 m (film thickness: 1.0 µm)
· Column temperature: 50°C → 10°C/min → 120°C → 25°C/min → 300°C
· Injection port temperature: 270°C
· Detector temperature: 280°C
· Sample amount: 0.05 mg

When the chloroprene polymer is manufactured, a raw material monomer is polymerized by a polymerization method such as emulsion polymerization, solution polymerization, suspension polymerization, or bulk polymerization. Among these polymerization methods, emulsion polymerization, which has various advantages such as easy control, easy extraction of a polymer from a post-polymerization liquid, and a relatively high polymerization velocity, is suitable.

The emulsion polymerization is one type of radical polymerization, and is, for example, a method in which a raw material monomer is charged in a reaction vessel together with a chain transfer agent, water, alkali (for example, a metal hydroxide such as potassium hydroxide or sodium hydroxide), an emulsifier (dispersant), a reducing agent (for example, sodium bisulfite), a polymerization initiator, and the like and then polymerized.

As the chain transfer agent, a chain transfer agent which is commonly used in emulsion polymerization of chloroprene can be used. Specific examples of the chain transfer agent include long chain alkylmercaptans such as n-dodecylmercaptan and tert-dodecylmercaptan; and dialkylxanthogen disulfides such as diisopropylxanthogen disulfide and diethylxanthogen disulfide. The chain transfer agent can be used alone or in combination of two or more kinds thereof. In the polymerization of the polymer A or the polymer B, the used amount of the chain transfer agent is preferably 0.01 to 10 parts by mass with respect to 100 parts by mass of the monomers. In the polymerization of the polymer A, the used amount of the chain transfer agent may be 0.01 to 1 part by mass, 0.01 to 0.1 parts by mass, 0.01 to 0.05 parts by mass, 0.02 to 1 part by mass, 0.02 to 0.1 parts by mass, or 0.02 to 0.05 parts by mass, with respect to 100 parts by mass of the monomers. In the polymerization of the polymer B, the used amount of the chain transfer agent may be 1 to 10 parts by mass, 1 to 8 parts by mass, 1 to 5 parts by mass, 3 to 10 parts by mass, 3 to 8 parts by mass, or 3 to 5 parts by mass, with respect to 100 parts by mass of the monomers.

Examples of the emulsifier include an anionic emulsifier and a non-ionic emulsifier. Examples of the anionic emulsifier include fatty acid salts such as potassium tallowate, partially hydrogenated potassium tallowate, potassium oleate, and sodium oleate; resin acid salts such as potassium rosinate, sodium rosinate, hydrogenated potassium rosinate, and hydrogenated sodium rosinate; alkylbenzene sulfonic acid salts such as sodium dodecylbenzenesulfonate; and a sodium salt of β-naphthalene sulfonic acid formalin condensate. Examples of the non-ionic emulsifier include a polyethylene glycol ester type emulsifier and polyvinyl alcohol. Among these, the anionic emulsifier is preferred, and at least one selected from the group consisting of potassium rosinate and sodium rosinate is more preferred. The emulsifier can be used alone or in combination of two or more kinds thereof. In the polymerization of the polymer A or the polymer B, the used amount of the emulsifier is preferably 1.0 to 6.5 parts by mass with respect to 100 parts by mass of the monomers.

As the polymerization initiator, an inorganic peroxide such as potassium persulfate, ammonium persulfate, sodium persulfate, or hydrogen peroxide; an organic peroxide such as benzoyl peroxide; and the like can be used. The polymerization initiator can be used alone or in combination of two or more kinds thereof. In the polymerization of the polymer A or the polymer B, the used amount of the polymerization initiator is preferably 0.01 to 10 parts by mass with respect to 100 parts by mass of the monomers.

In the polymerization of the polymer A or the polymer B, the amount of water used at the time of emulsion polymerization is preferably 50 to 300 parts by mass and more preferably 80 to 150 parts by mass, with respect to 100 parts by mass of the monomers.

In the polymerization of the polymer A or the polymer B, the polymerization temperature is not particularly limited, and may be in a temperature range of 5 to 55°C, 10 to 45°C, 15 to 45°C, 15 to 40°C, 15 to 35°C, or 15 to 30°C, from the viewpoint of easily maintaining the temporal stability of the flexibility of the chloroprene polymer.

In the polymerization of the polymer A or the polymer B, the polymerization rate (polymerization conversion rate) of the raw material monomer may be 50 to 95%, 60 to 95%, 70 to 95%, 80 to 95%, 50 to 90%, 60 to 90%, 70 to 90%, 80 to 90%, 50 to 80%, 60 to 80%, 70 to 80%, 50 to 70%, or 60 to 70%. When the polymerization rate is set within this range, the solid content of the chloroprene polymer and the polymerization time during manufacturing become appropriate, which is excellent in productivity.

As a polymerization terminator that is added when the polymerization rate of the raw material monomer reaches a target polymerization rate to terminate the polymerization, for example, thiodiphenylamine, 4-tert-butylcatechol, 2,2'-methylenebis(4-methyl-6-tert-butylphenol), diethylhydroxylamine, or the like can be used.

After unreacted monomers are removed after the polymerization, the solid content concentration can be adjusted in an appropriate range by a condensation operation. In the polymerization of the polymer A or the polymer B, the solid content concentration is preferably in a range of 45 to 65% by mass.

An embodiment of a method for manufacturing a chloroprene polymer of the present embodiment may be an embodiment which includes a step of mixing a polymer A obtained by polymerizing chloroprene and 2,3-dichloro-1,3-butadiene at a polymerization temperature of 10 to 45°C and a polymerization rate of 80 to 95% in the presence of a chain transfer agent, water (for example, pure water), alkali, an emulsifier, a reducing agent, and a polymerization initiator, and a polymer B obtained by polymerizing 90 to 100 parts by mass of chloroprene at a polymerization temperature of 10 to 45°C and a polymerization rate of 60 to 90% in the presence of 1 to 10 parts by mass of a chain transfer agent, water (for example, pure water), alkali, an emulsifier, a reducing agent, and a polymerization initiator, in which a ratio of 2,3-dichloro-1,3-butadiene in the polymerization of the polymer B is 10 parts by mass or less (for example, 0 to 10 parts by mass). In this embodiment, the ratio of the polymer A may be 70 to 95% by mass in terms of solid content on the basis of the total of the polymer A and the polymer B.

As the numerical range of the polymerization temperature of the polymer A or the polymer B, each numerical range mentioned above for the polymerization temperature in the chloroprene polymer of the present embodiment may be used. As the numerical range of the polymerization rate of the polymer A or the polymer B, each numerical range mentioned above for the polymerization rate in the chloroprene polymer of the present embodiment may be used. As the numerical range of the used amount of the chain transfer agent in the polymerization of the polymer B, each numerical range mentioned above for the used amount of the chain transfer agent in the chloroprene polymer of the present embodiment may be used. The ratio of the 2,3-dichloro-1,3-butadiene in the polymerization of the polymer B may be 1 part by mass or more, 2 parts by mass or more, 3 parts by mass or more, 5 parts by mass or more, 6 parts by mass or more, 8 parts by mass or more, or 9 parts by mass or more. As the numerical range of the ratio of the polymer A, each numerical range mentioned above for the ratio of the polymer A in the chloroprene polymer of the present embodiment may be used.

A chloroprene polymer composition of the present embodiment contains the chloroprene polymer of the present embodiment. The chloroprene polymer composition of the present embodiment may contain a pH adjuster, a freezing stabilizer, an emulsion stabilizer, a viscosity modifier, an anti-aging agent, an antiseptic, or the like.

The chloroprene polymer composition of the present embodiment may contain an additive such as a vulcanizing agent, a vulcanization accelerator, an anti-aging agent (an antioxidant; for example, an ozone antioxidant), a filler, a plasticizer, a pigment, a coloring agent, a wetting agent, or an antifoaming agent. The chloroprene polymer composition of the present embodiment may be a mixed solution for dip molding containing the chloroprene polymer and these additives. The chloroprene polymer composition of the present embodiment may be an embodiment which not contains at least one additive selected from the group consisting of a vulcanizing agent, a vulcanization accelerator, an anti-aging agent, a filler, a plasticizer, a pigment, a coloring agent, a wetting agent, and an antifoaming agent, as an embodiment before mixing these additives.

Examples of the vulcanizing agent include sulfur (molecular sulfur; for example, cyclic sulfur such as S8); metal oxides such as zinc oxide, lead oxide, and trilead tetraoxide; and magnesium oxide. The content of the vulcanizing agent may be 0.5 to 10 parts by mass with respect to 100 parts by mass of solid content of the chloroprene polymer, from the viewpoint of easily causing crosslinking to sufficiently proceed and easily obtaining the tensile strength, modulus, and the like of a dip molded body suitably, and the viewpoint of easily obtaining a suitable texture of a dip molded body. The cross-linking agent can be used alone or in combination of two or more kinds thereof.

Examples of the vulcanization accelerator include thiuram-based, dithiocarbamate-based, thiourea-based, guanidine-based, xanthate-based, and thiazole-based vulcanization accelerators. The vulcanization accelerator may be 0.5 to 5 parts by mass with respect to 100 parts by mass of solid content of the chloroprene polymer from the viewpoint of easily obtaining an appropriate strength. The vulcanization accelerator can be used alone or in combination of two or more kinds thereof.

Examples of the anti-aging agent include diphenylamine-based compounds such as octylated diphenylamine, p-(p-toluene-sulfonylamide)diphenylamine, 4,4'-bis(α,α-dimethylbenzyl)diphenylamine, N,N'-diphenyl-p-phenylenediamine (DPPD), and N-isopropyl-N'-phenyl-p-phenylenediamine (IPPD). Examples of the ozone antioxidant include N,N'-diphenyl-p-phenylenediamine (DPPD) and N-isopropyl-N'-phenyl-p-phenylenediamine (IPPD). As the anti-aging agent, in the case of importantly taking appearance (particularly, color tone) or hygienic properties into consideration for medical gloves and the like, a hindered phenol-based anti-aging agent can be used. The content of the anti-aging agent may be 0.1 to 5 parts by mass with respect to 100 parts by mass of solid content of the chloroprene polymer, from the viewpoint of easily obtaining the anti-aging effect sufficiently.

### <Vulcanizate, dip molded body, manufacturing methods for these>

A vulcanizate may be obtained by vulcanizing the chloroprene polymer composition of the present embodiment. A vulcanizate of the present embodiment is a vulcanizate of the chloroprene polymer composition of the present embodiment and is obtained by vulcanizing the chloroprene polymer composition of the present embodiment. The vulcanizate of the present embodiment may have a film shape.

A dip molded body of the present embodiment is a dip molded body of the chloroprene polymer composition of the present embodiment. The dip molded body of the present embodiment is a dip molded body using the chloroprene polymer composition of the present embodiment and is obtained by dip-molding the chloroprene polymer composition of the present embodiment. The dip molded body of the present embodiment may be a dip molded film (film-shaped dip molded body), and may be a dip molded film formed on a base material. The dip molded body of the present embodiment has very high flexibility, and further, has sufficient breaking strength and breaking elongation as a dip molded body. The dip molded body of the present embodiment may be a molded article of the vulcanizate of the present embodiment. The dip molded body of the present embodiment may be gloves, balloons, catheters, or boots.

The thickness (for example, the minimum thickness) of the dip molded body (for example, a dip molded film) may be in the following range. The thickness of the dip molded body may be 0.01 mm or more, 0.05 mm or more, 0.10 mm or more, 0.15 mm or more, or 0.20 mm or more. The thickness of the dip molded body may be 0.50 mm or less, 0.45 mm or less, 0.40 mm or less, 0.35 mm or less, 0.30 mm or less, or 0.25 mm or less. From these viewpoints, the thickness of the dip molded body may be 0.01 to 0.50 mm, 0.10 to 0.50 mm, 0.10 to 0.30 mm, or 0.10 to 0.25 mm. The thickness of the dip molded body can be adjusted by a time for immersing a molding die in the chloroprene polymer composition, the solid content concentration of the chloroprene polymer composition, or the like. In a case where the thickness of the dip molded body is desired to be decreased, the immersion time may be shortened, or the solid content concentration of the chloroprene polymer composition may be lowered.

In a method for manufacturing a dip molded body of the present embodiment, the chloroprene polymer composition of the present embodiment is dip-molded. As a forming method used when the dip molded body of the present embodiment is produced, a known method can be used, and example thereof include a simple dipping method, a coagulant dipping method, a thermosensitive dipping method, and an electrodeposition method. From the viewpoint of ease of production and the viewpoint of easily obtaining a dip molded body having a constant thickness, a coagulant dipping method can be used. Specifically, a molding die coated with a coagulant is immersed in the chloroprene polymer composition, and the chloroprene polymer composition is solidified. Then, water-soluble impurities are removed by leaching, drying is then performed, and further, vulcanization is performed to form a dip molded film (rubber coating film), and then the dip molded film is released from the mold. Thereby, a film-shaped dip molded body can be obtained.

### Examples

Hereinafter, the present invention will be more specifically described on the basis of Examples and Comparative Examples; however, the present invention is not limited to these Examples. Note that, an evaluation method will be described below.

### <Evaluation method>

### (GPC measurement of toluene soluble content)

20 mg of a dried product obtained by freeze-drying a chloroprene polymer A or B or a mixed chloroprene polymer was dissolved in 20 ml of toluene for 12 hours or longer to separate sol. Thereafter, the separated sol was dissolved in 20 ml of a THF solution to obtain a sample, and gel permeation chromatography (GPC) measurement was performed under the following conditions. The weight average molecular weight (Mw) was determined in terms of polystyrene.
Measurement apparatus: Gel permeation chromatograph (HLC-8320) manufactured by Tosoh Corporation
Column: TSKgel ALPHA-M manufactured by Tosoh Corporation
Eluent: THF (LiBr: 10 mM)
Eluent flow rate: 1.0 ml/min
Column temperature: 40°C
Detection method: Differential refractive index (RI) meter
Standard curve: Created using standard polystyrene

### (Toluene insoluble content)

1 g of a dried product obtained by freeze-drying a chloroprene polymer A or B or a mixed chloroprene polymer was cut into 2 mm square to obtain a small piece, and then this small piece was placed in a conical beaker and dissolved with toluene for 16 hours. Thereafter, centrifugal separation was performed, the gel fractions were separated using a 200-mesh wire net and then dried to obtain a dried product, and the mass of the dried product was measured to calculate the toluene insoluble content.

### (Thickness of film for evaluation)

The thicknesses (film thicknesses) of three places at the center portion of the film for evaluation were measured using a test piece thickness meter (manufactured by KOBUNSHI KEIKI CO., LTD., trade name "ASKER SDA-12") and the minimum thickness was obtained as the thickness of the film for evaluation.

### (Physical properties of film for evaluation)

The modulus at 100% elongation, the breaking strength, and the breaking elongation of the film for evaluation were measured according to JIS K 6251. A case where the modulus at 100% elongation as an index of flexibility is 0.70 MPa or less and the breaking strength is 17.0 MPa or more was determined as good.

### <Preparation of chloroprene polymer>

### (Example 1)

90.5 parts by mass of chloroprene (monomer), 9.5 parts by mass of 2,3-dichloro-1,3-butadiene (monomer), 0.032 parts by mass of n-dodecylmercaptan, 90 parts by mass of pure water, 4.5 parts by mass of rosin (manufactured by ARAKAWA CHEMICAL INDUSTRIES, LTD., trade name: HARTALL R-WW), 0.78 parts by mass of potassium hydroxide, 0.40 parts by mass of a sodium salt of β-naphthalene sulfonic acid formalin condensate (manufactured by Kao Corporation, trade name: DEMOL N), and 0.40 parts by mass of sodium bisulfite were mixed. 0.1 parts by mass of potassium persulfate was added as a polymerization initiator, and then polymerization was performed under a nitrogen flow at a polymerization temperature of 15°C. 0.01 parts by mass of diethylhydroxylamine as a polymerization terminator was added at the time point of a polymerization rate of 85% to terminate the polymerization, unreacted monomers were removed, and a condensation operation was performed, thereby obtaining a chloroprene polymer A having a solid content concentration of 60%. As a result of the gel permeation chromatography (GPC) measurement of the toluene soluble content of the chloroprene polymer A, the weight average molecular weight (Mw) of the toluene soluble content was 607,000. Furthermore, the toluene insoluble content of the chloroprene polymer A was 85% by mass.

100 parts by mass of chloroprene (monomer), 5.0 parts by mass of n-dodecylmercaptan, 90 parts by mass of pure water, 5.3 parts by mass of disproportionated rosin (manufactured by ARAKAWA CHEMICAL INDUSTRIES, LTD., trade name: RONDIS K-25), 0.78 parts by mass of potassium hydroxide, 0.40 parts by mass of a sodium salt of β-naphthalene sulfonic acid formalin condensate (manufactured by Kao Corporation, trade name: DEMOL N), and 0.50 parts by mass of sodium bisulfite were mixed. 0.1 parts by mass of potassium persulfate was added as a polymerization initiator, and then polymerization was performed under a nitrogen flow at a polymerization temperature of 40°C. 0.01 parts by mass of diethylhydroxylamine as a polymerization terminator was added at the time point of a polymerization rate of 60% to terminate the polymerization, unreacted monomers were removed, and a condensation operation was performed, thereby obtaining a chloroprene polymer B having a solid content concentration of 60%. As a result of the gel permeation chromatography (GPC) measurement of the toluene soluble content of the chloroprene polymer B, the weight average molecular weight (Mw) of the toluene soluble content was 16,000. Furthermore, the toluene insoluble content of the chloroprene polymer B was 1% by mass.

Next, these chloroprene polymers A and B were mixed at A/B = 75/25 (mass ratio of solid content) to obtain a mixed chloroprene polymer. As a result of the gel permeation chromatography (GPC) measurement of the toluene soluble content of the mixed chloroprene polymer, a first peak having a weight average molecular weight (Mw) of 680,000 and a second peak having a weight average molecular weight (Mw) of 17,000 were confirmed. Furthermore, the toluene insoluble content of the mixed chloroprene polymer was 70% by mass.

### (Example 2)

A mixed chloroprene polymer was prepared by the same procedures as in Example 1, except that the monomer of the chloroprene polymer B of Example 1 was changed to 90.5 parts by mass of chloroprene and 9.5 parts by mass of 2,3-dichloro-1,3-butadiene. Various measurement results of the chloroprene polymers A and B and the mixed chloroprene polymer are shown in Table 1.

### (Example 3)

A mixed chloroprene polymer was prepared by the same procedures as in Example 1, except that the polymerization temperature of the chloroprene polymer A of Example 1 was changed to 40°C. Various measurement results of the chloroprene polymers A and B and the mixed chloroprene polymer are shown in Table 1.

### (Examples 4 and 5)

Mixed chloroprene polymers were prepared by the same procedures as in Example 1, except that the chain transfer agent of the chloroprene polymer A of Example 1 was changed to 0.016 parts by mass and 0.054 parts by mass in Examples 4 and 5, respectively. Various measurement results of the chloroprene polymers A and B and the mixed chloroprene polymer are shown in Table 1.

### (Example 6)

A mixed chloroprene polymer was prepared by the same procedures as in Example 1, except that the polymerization temperature of the chloroprene polymer B of Example 1 was changed to 15°C. Various measurement results of the chloroprene polymers A and B and the mixed chloroprene polymer are shown in Table 1.

### (Examples 7 and 8)

Mixed chloroprene polymers were prepared by the same procedures as in Example 1, except that the chain transfer agent of the chloroprene polymer B of Example 1 was changed to 1.0 part by mass and 10.0 parts by mass in Examples 7 and 8, respectively. Various measurement results of the chloroprene polymers A and B and the mixed chloroprene polymer are shown in Table 2.

### (Examples 9 to 11)

Mixed chloroprene polymers were prepared by the same procedures as in Example 1, except that the mixing ratio of the chloroprene polymer A and the chloroprene polymer B of Example 1 was changed to 95/5, 85/15, and 70/30 (mass ratio) in Examples 9 to 11, respectively. Various measurement results of the chloroprene polymers A and B and the mixed chloroprene polymer are shown in Table 2.

### (Comparative Example 1)

A mixed chloroprene polymer was prepared by the same procedures as in Example 1, except that the mixing ratio of the chloroprene polymer A and the chloroprene polymer B of Example 1 was changed to 100/0 (mass ratio). Various measurement results of the chloroprene polymer A are shown in Table 3.

### (Comparative Examples 2 and 3)

Mixed chloroprene polymers were prepared by the same procedures as in Example 1, except that the chain transfer agent of the chloroprene polymer A of Example 1 was changed to 0.01 parts by mass and 0.08 parts by mass in Comparative Examples 2 and 3, respectively. Various measurement results of the chloroprene polymers A and B and the mixed chloroprene polymer are shown in Table 3.

### (Comparative Example 4)

A mixed chloroprene polymer was prepared by the same procedures as in Example 1, except that the polymerization rate of the chloroprene polymer A of Example 1 was changed to 45%. Various measurement results of the chloroprene polymers A and B and the mixed chloroprene polymer are shown in Table 3.

### (Comparative Examples 5 and 6)

Mixed chloroprene polymers were prepared by the same procedures as in Example 1, except that the chain transfer agent of the chloroprene polymer B of Example 1 was changed to 0.25 parts by mass and 13.0 parts by mass in Comparative Examples 5 and 6, respectively. Various measurement results of the chloroprene polymers A and B and the mixed chloroprene polymer are shown in Table 3.

### <Preparation of chloroprene polymer composition for molding>

An aqueous dispersion having a solid content concentration of 40% was prepared by mixing 1 part by mass of sulfur, 2 parts by mass of zinc oxide (manufactured by SAKAI CHEMICAL INDUSTRY CO., LTD., trade name "Zinc oxide II"), 2 parts by mass of a vulcanization accelerator (manufactured by OUCHI SHINKO CHEMICAL INDUSTRIAL CO., LTD., trade name: NOCCELER BZ), 2 parts by mass of an anti-aging agent (manufactured by OMNOVA Solutions Inc., trade name: Wingstay-L), 0.1 parts by mass of a sodium salt of β-naphthalene sulfonic acid formalin condensate (manufactured by Kao Corporation, trade name: DEMOL N), and 10.7 parts by mass of water at 20°C for 16 hours using a ceramic ball mill. 7.1 parts by mass of solid content of this aqueous dispersion was mixed with 100 parts by mass of solid content of the aforementioned mixed chloroprene polymer, and then water was added to adjust the entire solid content concentration to 30% by mass, thereby producing a chloroprene polymer composition for molding.

### <Production of film for evaluation>

A congealing liquid was obtained by mixing 61 parts by mass of water, 36 parts by mass of potassium nitrate tetrahydrate, and 3 parts by mass of calcium carbonate. A ceramic cylinder (material: ceramic, manufactured by SHINKO IND. LTD.) having an outside diameter of 50 mm was immersed in this congealing liquid for 1 second and was then taken out. Drying was performed at room temperature of 23°C for 3 minutes and then drying was performed at 70°C for 1 minute. Thereafter, the cylinder was immersed in the aforementioned chloroprene polymer composition for molding for 2 minutes. Subsequently, drying was performed at 130°C for 3 minutes and the cylinder was then immersed in hot water at 40°C for 1 minute to wash. Thereafter, vulcanization was performed at 130°C for 4 hours, thereby producing a film for evaluation (a dip molded body, a vulcanized film) on the outer periphery and the like of the cylinder. The film for evaluation was peeled off from the outer periphery of the cylinder and then evaluation was performed. Note that, since the adhesion of the dip molded body was strong so that the film for evaluation could not peeled off from the cylinder, Comparative Example 5 was evaluated as unavailable production.

### <Result>

From comparison between each Example and each Comparative Example, it is found that, when in the gel permeation chromatography (GPC) measurement of the toluene soluble content, the chloroprene polymer has a first peak having a weight average molecular weight of 500,000 to 900,000 and a second peak having a weight average molecular weight of 7,000 to 80,000 and the toluene insoluble content of the chloroprene polymer is 60% by mass or more, the modulus at 100% elongation is low, flexibility is excellent, and high breaking strength is shown.

**[Table 1]**

| | | | Example 1 | | Example 2 | | Example 3 | | Example 4 | | Example 5 | | Example 6 | |
|---|---|---|---|---|---|---|---|---|---|---|---|---|---|---|
| | | | A | B | A | B | A | B | A | B | A | B | A | B |
| | Chloroprene | | 90.5 | 100 | 90.5 | 90.5 | 90.5 | 100 | 90.5 | 100 | 90.5 | 100 | 90.5 | 100 |
| | 2.3-Dichloro-1,3-butadiene | | 9.5 | 0 | 9.5 | 9.5 | 9.5 | 0 | 9.5 | 0 | 9.5 | 0 | 9.5 | 0 |
| | Dodecylmercaptan | | 0.032 | 5.0 | 0.032 | 5.0 | 0.032 | 5.0 | 0.016 | 5.0 | 0.054 | 5.0 | 0.032 | 5.0 |
| | Pure water | | 90 | 90 | 90 | 90 | 90 | 90 | 90 | 90 | 90 | 90 | 90 | 90 |
| | Rosin | | 4.5 | 5.3 | 4.5 | 5.3 | 4.5 | 5.3 | 4.5 | 5.3 | 4.5 | 5.3 | 4.5 | 5.3 |
| Polymerization | Potassium hydroxide | | 0.78 | 0.78 | 0.78 | 0.78 | 0.78 | 0.78 | 0.78 | 0.78 | 0.78 | 0.78 | 0.78 | 0.78 |
| | Sodium salt of β-naphthalene sulfonic acid formalin condensate | | 0.40 | 0.40 | 0.40 | 0.40 | 0.40 | 0.40 | 0.40 | 0.40 | 0.40 | 0.40 | 0.40 | 0.40 |
| | Sodium bisulfite | | 0.40 | 0.50 | 0.40 | 0.50 | 0.40 | 0.50 | 0.40 | 0.50 | 0.40 | 0.50 | 0.40 | 0.50 |
| | Polymerization temperature [°C] | | 15 | 40 | 15 | 40 | 40 | 40 | 15 | 40 | 15 | 40 | 15 | 15 |
| | Polymerization rate [%] | | 85 | 60 | 85 | 60 | 85 | 60 | 85 | 60 | 85 | 60 | 85 | 60 |
| | Each chloroprene polymer | Weight average molecular weight of toluene soluble content | 607,000 | 16,000 | 607,000 | 16,000 | 601,000 | 16,000 | 850,000 | 16,000 | 510,000 | 16,000 | 603,000 | 15,000 |
| | | Toluene insoluble content [% by mass] | 85 | 1 | 85 | 1 | 90 | 1 | 95 | 1 | 75 | 1 | 85 | 1 |
| | Mixed chloroprene polymer | Mixing ratio [% by mass] | 75 | 25 | 75 | 25 | 75 | 25 | 75 | 25 | 75 | 25 | 75 | 25 |
| | | Mw of first peak | 680.000 | | 680,000 | | 660,000 | | 880,000 | | 530,000 | | 680,000 | |
| Evaluation | | Mw of second peak | 17.000 | | 17.000 | | 17.000 | | 17.000 | | 17,000 | | 16.000 | |
| | | Toluene insoluble content [% by mass] | 70 | | 70 | | 75 | | 78 | | 60 | | 70 | |
| | Dip molded body | Film thickness [mm] | 0.20 | | 0.16 | | 0.18 | | 0.21 | | 0.20 | | 0.19 | |
| | | Modulus at 100% elongation [MPa] | 0.61 | | 0.47 | | 0.42 | | 0.66 | | 0.68 | | 0.65 | |
| | | Breaking strength [MPa] | 19.6 | | 19.2 | | 17.3 | | 22.3 | | 22.6 | | 21.3 | |
| | | Breaking elongation [%] | 1035 | | 1081 | | 1125 | | 1033 | | 950 | | 1040 | |

**[Table 2]**

| | | | Example 7 | | Example 8 | | Example 9 | | Example 10 | | Example 11 | |
|---|---|---|---|---|---|---|---|---|---|---|---|---|
| | | | A | B | A | B | A | B | A | B | A | B |
| | Chloroprene | | 90.5 | 100 | 90.5 | 100 | 90.5 | 100 | 90.5 | 100 | 90.5 | 100 |
| | 2.3-Dichloro-1.3-butadiene | | 9.5 | 0 | 9.5 | 0 | 9.5 | 0 | 9.5 | 0 | 9.5 | 0 |
| | Dodecvimercaptan | | 0.032 | 1.0 | 0.032 | 10.0 | 0.032 | 5.0 | 0.032 | 5.0 | 0.032 | 5.0 |
| | Pure water | | 90 | 90 | 90 | 90 | 90 | 90 | 90 | 90 | 90 | 90 |
| Polymerization | Rosin | | 4.5 | 5.3 | 4.5 | 5.3 | 4.5 | 5.3 | 4.5 | 5.3 | 4.5 | 5.3 |
| | Potassium hydroxide | | 0.78 | 0.78 | 0.78 | 0.78 | 0.78 | 0.78 | 0.78 | 0.78 | 0.78 | 0.78 |
| | Sodium salt of β-naphthalene sulfonic acid formalin condensate | | 0.40 | 0.40 | 0.40 | 0.40 | 0.40 | 0.40 | 0.40 | 0.40 | 0.40 | 0.40 |
| | Sodium bisulfite | | 0.40 | 0.50 | 0.40 | 0.50 | 0.40 | 0.50 | 0.40 | 0.50 | 0.40 | 0.50 |
| | Polymerization temperature [°C] | | 15 | 40 | 15 | 40 | 15 | 40 | 15 | 40 | 15 | 40 |
| | Polymerization rate [%] | | 85 | 60 | 85 | 60 | 85 | 60 | 85 | 60 | 85 | 60 |
| | Each chloroprene polymer | Weight average molecular weight of toluene soluble content | 603,000 | 73,000 | 603,000 | 7,000 | 603,000 | 16,000 | 603,000 | 16,000 | 603,000 | 16,000 |
| | | Toluene insoluble content [% by mass] | 85 | 3 | 85 | 2 | 85 | 1 | 85 | 1 | 85 | 1 |
| | Mixed chloroprene polymer | Mixing ratio [% by mass] | 75 | 25 | 75 | 25 | 95 | 5 | 85 | 15 | 70 | 30 |
| | | Mw of first peak | 680.000 | | 680.000 | | 610.000 | | 650,000 | | 700.000 | |
| Evaluation | | Mw of second peak | 75,000 | | 7.500 | | 17,000 | | 17,000 | | 17.000 | |
| | | Toluene insoluble content [% by mass] | 70 | | 70 | | 83 | | 77 | | 65 | |
| | Dip molded body | Film thickness [mm] | 0.21 | | 0.22 | | 0.19 | | 0.21 | | 0.19 | |
| | | Modulus at 100% elongation [MPa] | 0.58 | | 0.62 | | 0.69 | | 0.65 | | 0.55 | |
| | | Breaking strength [MPa] | 18.0 | | 20.9 | | 22.3 | | 22.0 | | 18.9 | |
| | | Breaking elongation [%] | 1354 | | 1064 | | 1015 | | 1030 | | 1143 | |

**Table 3]**

| | | | Comparative Example 1 | | Comparative Example 2 1 | | Comparative Example 3 | | Comparative Example 4 | | Comparative Example 5 | | Comparative Example 6 | |
|---|---|---|---|---|---|---|---|---|---|---|---|---|---|---|
| | | | A | B | A | B | A | B | A | B | A | B | A | B |
| | Chloroprene | | 90.5 | | 90.5 | 100 | 90.5 | 100 | 90.5 | 100 | 90.5 | 100 | 90.5 | 100 |
| | 2.3-Dichloro-1.3-butadiene | | 9.5 | | 9.5 | 0 | 9.5 | 0 | 9.5 | 0 | 9.5 | 0 | 9.5 | 0 |
| | Dodecylmercaptan | | 0.032 | | 0.01 | 5.0 | 0.08 | 5.0 | 0.032 | 5.0 | 0.032 | 0.25 | 0.032 | 13.0 |
| | Pure water | | 90 | | 90 | 90 | 90 | 90 | 90 | 90 | 90 | 90 | 90 | 90 |
| | Rosin | | 4.5 | | 4.5 | 5.3 | 4.5 | 5.3 | 4.5 | 5.3 | 4.5 | 5.3 | 4.5 | 5.3 |
| Polymeriation | Potassium hydroxide | | 0.78 | | 0.78 | 0.78 | 0.78 | 0.78 | 0.78 | 0.78 | 0.78 | 0.78 | 0.78 | 0.78 |
| | Sodium salt of β-naphthalene sulfonic acid formalin condensate | | 0.40 | Not used | 0.40 | 0.40 | 0.40 | 0.40 | 0.40 | 0.40 | 0.40 | 0.40 | 0.40 | 0.40 |
| | Sodium bisulfite | | 0.40 | | 0.40 | 0.50 | 0.40 | 0.50 | 0.40 | 0.50 | 0.40 | 0.50 | 0.40 | 0.50 |
| | Polymerization temperature [°C] | | 15 | | 15 | 40 | 15 | 40 | 15 | 40 | 15 | 40 | 15 | 40 |
| | Polymerization rate [%] | | 85 | | 85 | 60 | 85 | 60 | 45 | 60 | 85 | 60 | 85 | 60 |
| | Each chloroprene polymer | Weight average molecular weight of toluene soluble content | 607,000 | | 950,000 | 16,000 | 450,000 | 16,000 | 450,000 | 16,000 | 603,000 | 250,000 | 603,000 | 4,000 |
| | | Toluene insoluble content [% by mass] | 85 | | 97 | 1 | 70 | 1 | 60 | 1 | 85 | 13 | 85 | 1 |
| | Mixed chloroprene polymer | Mixing ratio [% by mass] | 100 | 0 | 75 | 25 | 75 | 25 | 75 | 25 | 75 | 25 | 75 | 25 |
| | | Mw of first peak | 680.000 | | 970.000 | | 470.000 | | 610,000 | | 610,000 | | 610.000 | |
| | | Mw of second peak | No peak | | 17,000 | | 17.000 | | 17.000 | | 255.000 | | 4.500 | |
| Evaluation | | Toluene insoluble content [% by mass] | 85 | | 77 | | 60 | | 50 | | 70 | | 70 | |
| | Dip molded body | Film thickness [mm] | 0.21 | | 0.21 | | 0.18 | | 0.20 | | 0.20 | | Unavailable production | |
| | | Modulus at 100% elongation [MPa] | 0.85 | | 0.77 | | 0.43 | | 0.83 | | 0.82 | | | |
| | | Breaking strength [MPa] | 26.7 | | 24.2 | | 14.5 | | 23.1 | | 22.6 | | | |
| | | Breaking elongation [%] | 1090 | | 1067 | | 1189 | | 1043 | | 1110 | | | |

## Claims

1. A chloroprene polymer comprising at least one selected from the group consisting of a homopolymer of chloroprene and a copolymer of chloroprene with 2,3-dichloro-1,3-butadiene, and wherein a toluene insoluble content is 60% by mass or more, **characterized in that**
in gel permeation chromatography measurement of a toluene soluble content, the chloroprene polymer has a first peak having a weight average molecular weight of 500,000 to 900,000 and a second peak having a weight average molecular weight of 7,000 to 80,000.

2. The chloroprene polymer according to claim 1, wherein the chloroprene polymer is a mixture of a polymer A containing a copolymer of chloroprene with 2,3-dichloro-1,3-butadiene and a polymer B containing at least one selected from the group consisting of a homopolymer of chloroprene and a copolymer of chloroprene with 2,3-dichloro-1,3-butadiene,
a weight average molecular weight of a toluene soluble content in the polymer A is 500,000 to 900,000,
a weight average molecular weight of a toluene soluble content in the polymer B is 7,000 to 80,000,
a toluene insoluble content of the polymer A is 70% by mass or more, and
a toluene insoluble content of the polymer B is 5% by mass or less.

3. The chloroprene polymer according to claim 2, wherein a ratio of the polymer A is 70 to 95% by mass in terms of solid content on the basis of a total of the polymer A and the polymer B.

4. A chloroprene polymer composition comprising the chloroprene polymer according to any one of claims 1 to 3.

5. A dip molded body of the chloroprene polymer composition according to claim 4.

6. The dip molded body according to claim 5, wherein the dip molded body is gloves, balloons, catheters, or boots.

7. A method for manufacturing a chloroprene polymer, the method comprising:
a step of mixing a polymer A obtained by polymerizing chloroprene and 2,3-dichloro-1,3-butadiene at a polymerization temperature of 10 to 45°C and a polymerization rate of 80 to 95% in the presence of a chain transfer agent, water, alkali, an emulsifier, a reducing agent, and a polymerization initiator, and
a polymer B obtained by polymerizing 90 to 100 parts by mass of chloroprene at a polymerization temperature of 10 to 45°C and a polymerization rate of 60 to 90% in the presence of 1 to 10 parts by mass of a chain transfer agent, water, alkali, an emulsifier, a reducing agent, and a polymerization initiator, wherein
a ratio of 2,3-dichloro-1,3-butadiene in the polymerization of the polymer B is 10 parts by mass or less, and **characterized in that**
in gel permeation chromatography measurement of a toluene soluble content, the chloroprene polymer has a first peak having a weight average molecular weight of 500,000 to 900,000 and a second peak having a weight average molecular weight of 7,000 to 80,000.

8. The method for manufacturing a chloroprene polymer according to claim 7, wherein a ratio of the polymer A is 70 to 95% by mass in terms of solid content on the basis of a total of the polymer A and the polymer B.

## Patentansprüche

1. Chloroprenpolymer, umfassend mindestens eines, ausgewählt aus der Gruppe, bestehend aus einem Homopolymer von Chloropren und einem Copolymer von Chloropren mit 2,3-Dichlor-1,3-butadien, und wobei ein in Toluol unlöslicher Anteil 60 Massen-% oder mehr beträgt, **dadurch gekennzeichnet, dass**
bei der Gelpermeationschromatographiemessung eines toluollöslichen Anteils das Chloroprenpolymer einen ersten Peak mit einem gewichtsmittleren Molekulargewicht von 500.000 bis 900.000 und einen zweiten Peak mit einem gewichtsmittleren Molekulargewicht von 7.000 bis 80.000 aufweist.

2. Chloroprenpolymer gemäß Anspruch 1, wobei das Chloroprenpolymer eine Mischung von einem Polymer A, enthaltend ein Copolymer von Chloropren mit 2,3-Dichlor-1,3-butadien, und einem Polymer B, enthaltend mindestens eines, ausgewählt aus der Gruppe, bestehend aus einem Homopolymer von Chloropren und einem Copolymer von Chloropren mit 2,3-Dichlor-1,3-butadien, ist,
ein gewichtsmittleres Molekulargewicht eines toluollöslichen Anteils in dem Polymer A 500.000 bis 900.000 beträgt,
ein gewichtsmittleres Molekulargewicht eines toluollöslichen Anteils in dem Polymer B 7.000 bis 80.000 beträgt,
ein in Toluol unlöslicher Anteil des Polymers A 70 Massen-% oder mehr beträgt, und
ein in Toluol unlöslicher Anteil des Polymers B 5 Massen-% oder weniger beträgt.

3. Chloroprenpolymer gemäß Anspruch 2, wobei ein Anteil des Polymers A 70 bis 95 Massen-%, ausgedrückt als Feststoffgehalt, bezogen auf eine Gesamtmenge des Polymers A und des Polymers B, beträgt.

4. Chloroprenpolymerzusammensetzung, umfassend das Chloroprenpolymer gemäß einem der Ansprüche 1 bis 3.

5. Tauchformkörper der Chloroprenpolymerzusammensetzung gemäß Anspruch 4.

6. Tauchformkörper gemäß Anspruch 5, wobei der Tauchformkörper Handschuhe, Ballone, Katheter oder Stiefel ist.

7. Verfahren zur Herstellung eines Chloroprenpolymers, wobei das Verfahren umfasst:
einen Schritt des Mischens von einem Polymer A, erhalten durch Polymerisation von Chloropren und 2,3-Dichlor-1,3-butadien bei einer Polymerisationstemperatur von 10 bis 45°C und einer Polymerisationsrate von 80 bis 95% in Gegenwart von einem Kettenübertragungsmittel, Wasser, Alkali, einem Emulgator, einem Reduktionsmittel und einem Polymerisationsinitiator, und
einem Polymer B, erhalten durch Polymerisation von 90 bis 100 Massenteilen Chloropren bei einer Polymerisationstemperatur von 10 bis 45°C und einer Polymerisationsrate von 60 bis 90% in Gegenwart von 1 bis 10 Massenteilen eines Kettenübertragungsmittels, Wasser, Alkali, einem Emulgator, einem Reduktionsmittel und einem Polymerisationsinitiator, wobei ein Anteil des 2,3-Dichlor-1,3-butadiens bei der Polymerisation des Polymers B 10 Massenteile oder weniger beträgt, und **dadurch gekennzeichnet, dass**
bei der Gelpermeationschromatographiemessung eines toluollöslichen Anteils das Chloroprenpolymer einen ersten Peak mit einem gewichtsmittleren Molekulargewicht von 500.000 bis 900.000 und einen zweiten Peak mit einem gewichtsmittleren Molekulargewicht von 7.000 bis 80.000 aufweist.

8. Verfahren zur Herstellung eines Chloroprenpolymers gemäß Anspruch 7, wobei ein Anteil des Polymers A 70 bis 95 Massen-%, ausgedrückt als Feststoffgehalt, bezogen auf eine Gesamtmenge des Polymers A und des Polymers B, beträgt.

## Revendications

1. Polymère de chloroprène comprenant au moins un sélectionné dans le groupe consistant en un homopolymère de chloroprène et un copolymère de chloroprène avec du 2,3-dichloro-1,3-butadiène, et dans lequel une teneur en composant insoluble dans le toluène est de 60 % en masse ou plus, **caractérisé en ce que**
dans une mesure de chromatographie par perméation de gel d'une teneur en composant soluble dans le toluène, le polymère de chloroprène présente un premier pic présentant un poids moléculaire moyen en poids de 500 000 à 900 000 et un second pic présentant un poids moléculaire moyen en poids de 7000 à 80 000.

2. Polymère de chloroprène selon la revendication 1, dans lequel le polymère de chloroprène est un mélange d'un polymère A contenant un copolymère de chloroprène avec du 2,3-dichloro-1,3-butadiène et d'un polymère B contenant au moins un sélectionné dans le groupe consistant en un homopolymère de chloroprène et un copolymère de chloroprène avec du 2,3- dichloro-1,3-butadiène,
un poids moléculaire moyen en poids d'un composant soluble dans le toluène dans le polymère A est de 500 000 à 900 000,
un poids moléculaire moyen en poids d'un composant soluble dans le toluène dans le polymère B est de 7000 à 80 000,
une teneur en composant insoluble dans le toluène du polymère A est de 70 % en masse ou plus, et
une teneur en composant insoluble dans le toluène du polymère B est de 5 % en masse ou moins.

3. Polymère de chloroprène selon la revendication 2, dans lequel un rapport du polymère A est de 70 à 95 % en masse en termes de teneur en composants solides sur la base d'un total du polymère A et du polymère B.

4. Composition de polymère de chloroprène comprenant le polymère de chloroprène selon l'une quelconque des revendications 1 à 3.

5. Corps moulé par immersion de la composition de polymère de chloroprène selon la revendication 4.

6. Corps moulé par immersion selon la revendication 5, dans lequel le corps moulé par immersion est des gants, des ballonnets, des cathéters, ou des chaussures.

7. Procédé de fabrication d'un polymère de chloroprène, le procédé comprenant :
une étape de mélange d'un polymère A obtenu par polymérisation de chloroprène et de 2,3-dichloro-1,3-butadiène à une température de polymérisation de 10 à 45 °C et un taux de polymérisation de 80 à 95 % en présence d'un agent de transfert de chaîne, d'eau, d'alcali, d'un émulsifiant, d'un agent réducteur, et d'un initiateur de polymérisation, et
un polymère B obtenu par polymérisation de 90 à 100 parties en masse de chloroprène à une température de polymérisation de 10 à 45 °C et un taux de polymérisation de 60 à 90 % en présence de 1 à 10 parties en masse d'un agent de transfert de chaîne, d'eau, d'alcali, d'un émulsifiant, d'un agent réducteur, et d'un initiateur de polymérisation, dans lequel
un rapport de 2,3-dichloro-1,3-butadiène dans la polymérisation du polymère B est de 10 parties en masse ou moins, et **caractérisé en ce que**
dans une mesure de chromatographie par perméation de gel d'un composant soluble dans le toluène, le polymère de chloroprène présente un premier pic présentant un poids moléculaire moyen en poids de 500 000 à 900 000 et un second pic présentant un poids moléculaire moyen en poids de 7000 à 80 000.

8. Procédé de fabrication d'un polymère de chloroprène selon la revendication 7, dans lequel un rapport du polymère A est de 70 à 95 % en masse en termes de teneur en composants solides sur la base d'un total du polymère A et du polymère B.
